Europäisches Patentamt

European Patent Office

Office européen des brevets

(11) Veröffentlichungsnummer : **0 197 472**
**B1**

(12) EUROPÄISCHE PATENTSCHRIFT

(45) Veröffentlichungstag der Patentschrift :
**19.10.88**

(21) Anmeldenummer : 86104343.8

(22) Anmeldetag : 29.03.86

(51) Int. Cl.⁴ : **B 60 R 13/10**

(54) Verstärkungsbauteil aus Kunststoff für Kfz-Kennzeichenschilder.

(30) Priorität : 06.04.85 DE 8510272 U

(43) Veröffentlichungstag der Anmeldung :
**15.10.86 Patentblatt 86/42**

(45) Bekanntmachung des Hinweises auf die Patenterteilung : **19.10.88 Patentblatt 88/42**

(84) Benannte Vertragsstaaten :
**AT FR GB NL**

(56) Entgegenhaltungen :
DE-A- 2 644 554
DE-U- 7 706 370
DE-U- 8 429 913
GB-A-   347 863
US-A- 1 752 080

(73) Patentinhaber : **Erich Utsch KG**
**Marienhütte 49 Postfach 31 03 62**
**D-5900 Siegen (DE)**

(72) Erfinder : **Utsch, Manfred**
**Haspelweg 9**
**D-5900 Siegen (DE)**

(74) Vertreter : **Pürckhauer, Rolf**
**Friedrich-Ebert-Strasse 27 Postfach 10 09 28**
**D-5900 Siegen 1 (DE)**

Jouve, 18, rue St-Denis, 75001 Paris, France

## Beschreibung

Die Erfindung bezieht sich auf ein Verstärkungsbauteil aus beschränkt elastischem Kunststoff für ein Kennzeichenschild von Kraftfahrzeugen gemäß dem Oberbegriff des Patentanspruchs 1.

Bei einem aus dem DE-U-84 29 913 bekannten Verstärkungsbauteil dieser Gattung bildet der Rückwandbereich eine geschlossene Fläche. Für die Herstellung dieses bekannten Verstärkungsbauteils wird somit relativ viel Kunststoff gebraucht. Das bekannte Verstärkungsbauteil ist nicht einstückig ausgebildet, da an der einen Schmalseite des Rahmens das Winkelprofil aus einer abnehmbaren Leiste besteht.

Der Erfindung liegt die Aufgabe zugrunde, ein Verstärkungsbauteil der eingangs angegebenen Gattung zu schaffen, das aus möglichst wenig Kunststoff einstückig und kostengünstig herstellbar ist.

Diese Aufgabe wird erfindungsgemäß durch die kennzeichnenden Merkmale des Patentanspruchs 1 gelöst. Zweckmäßige Ausgestaltungen des erfindungsgemäßen Verstärkungsbauteils sind den Unteransprüchen zu entnehmen.

Ein aus dem DE-U-77 06 370 bekanntes Verstärkungsbauteil für ein Kennzeichenschild weist als Rahmen kein Winkelprofil auf, so daß das Kennzeichenschild nicht unabhängig von der Befestigung am Kraftfahrzeug allein durch das Verstärkungsbauteil gehalten wird. Soweit bei diesem bekannten Verstärkungsbauteil der Rückwandbereich durch Verbindungsstege gebildet wird, so befinden sich diese nur in einem der beiden seitlichen Endbereiche des Verstärkungsbauteils und bilden bei unterschiedlich langen Kennzeichenschildern lediglich einen seitlichen Anschlag für das jeweilige Kennzeichenschild, wobei der gegebenenfalls seitlich überstehende Bereich des Rahmens weggebrochen werden muß.

In den Zeichnungen ist ein Ausführungsbeispiel der Erfindung dargestellt, und zwar zeigen

Fig. 1 die Vorderseite eines erfindungsgemäßen Verstärkungsbauteils ohne Kennzeichenschild,

Fig. 2 die Rückseite des Verstärkungsbauteils und

Fig. 3 in größerem Maßstab einen Schnitt nach der Linie III-III in Fig. 2 mit Kennzeichenschild.

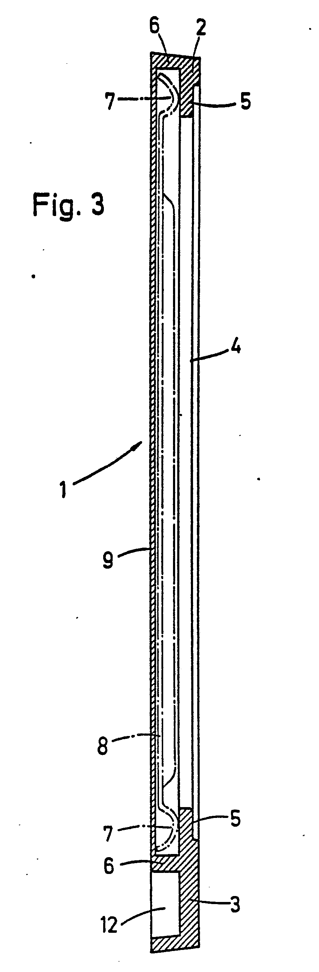

Das dargestellte Verstärkungsbauteil ist als ein rechteckiger Rahmen 1 mit zwei zueinander parallelen längeren Rahmenteilen 2 und 3 und zwei kürzeren Rahmenteilen 4 ausgebildet und besteht aus beschränkt elastischem Kunststoff. Die Rahmenteile 2, 3 und 4 bilden ein ringsum verlaufendes Winkelprofil, das einen Prägerand 7 eines Kennzeichenschildes 8 (Fig. 3) mit dem einen Schenkel 5 vorn und mit dem anderen Schenkel 6 seitlich abdeckt. Der den Prägerand 7 vorn abdeckende Schenkel 5 des Winkelprofils ist auf der Vorderseite zum freien Rand dieses Schenkels 5 hin zurückspringend abgesetzt und schwarz ausgelegt. Der äußere Randbereich dieses Schenkels 5 kann auf der Vorderseite silbergrau sein.

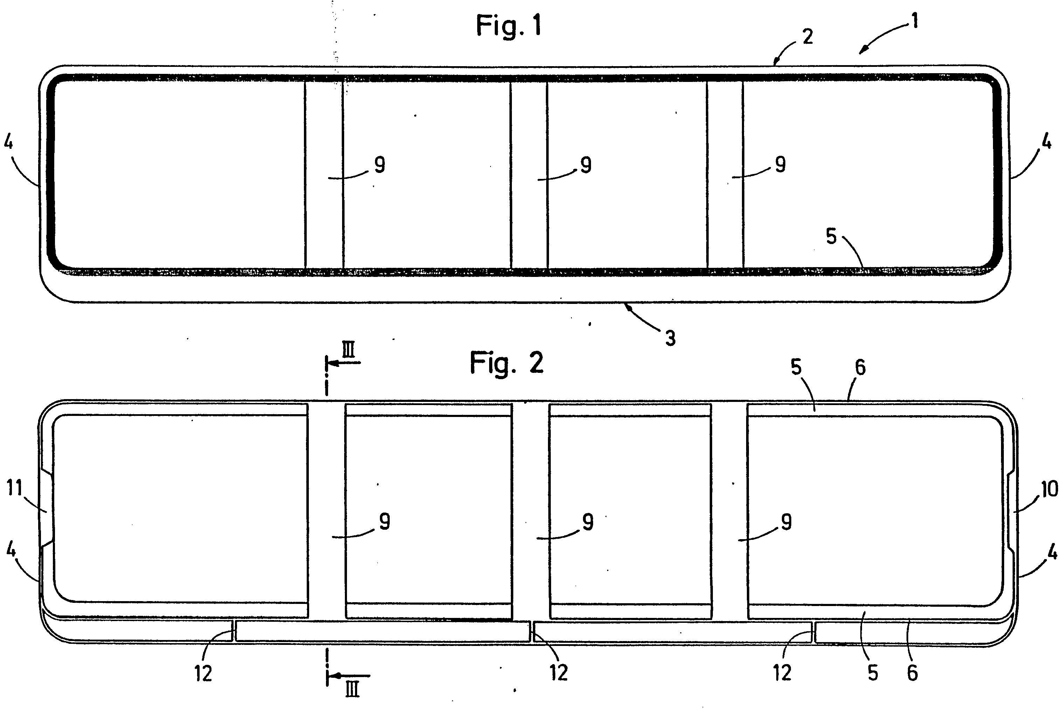

Der Rückwandbereich des einstückig ausgebildeten Rahmens 1 wird lediglich durch voneinander getrennte Rückwandteilbereiche gebildet, die aus mehreren in einem gegenseitigen Abstand und in einem Abstand von den kürzeren Rahmenteilen 4 angeordneten, die längeren Rahmenteile 2 und 3 miteinander verbindenden dünnen Stegen 9, von denen zweckmäßigerweise drei Stück vorgesehen sind, sowie aus zwei in der gleichen Ebene liegenden, an die kürzeren Rahmenteile 4 angeformten Zungen 10 und 11 bestehen, die ebenfalls hinter das Kennzeichenschild 8 greifen. Die eine Zunge 10 (Fig. 2) ist, in Längsrichtung der längeren Rahmenteile gesehen, etwas kürzer als die ihr gegenüberliegende Zunge 11. Dadurch kann von der Seite der kürzeren Zunge 10 her das Kennzeichenschild 8 vor der Montage am Kraftfahrzeug in den Rahmen 1 eingeschoben werden. Durch die leichte Elastizität des Rahmens 1 kann die Zunge 10 nach dem Einschieben des Kennzeichenschildes 8 durch leichtes Ausbiegen des zugehörigen kürzeren Rahmenteils 4 hinter das Kennzeichenschild 8 gerastet werden, so daß dieses zwischen den Schenkeln 5 und 6 des Winkelprofils, den Stegen 9 und den Zungen 10 und 11 gehalten wird.

Wie aus den Zeichnungen erkennbar, ist der eine der längeren Rahmenteile, hier der Rahmenteil 3, breiter ausgebildet, so daß auf der Vorderseite eine Beschriftung (z. B. der Firmenname des Autohändlers) aufgebracht werden kann. Der breitere Rahmenteil 3 kann je nach Montagemöglichkeit am Fahrzeug oben oder unten angeordnet werden und weist auf seiner hohlen Rückseite Verstärkungsrippen 12 auf.

## Patentansprüche

1. Verstärkungsbauteil aus beschränkt elastischem Kunststoff für ein Kennzeichenschild von Kraftfahrzeugen, bestehend aus einem entsprechend dem Umfang des Kennzeichenschildes jeweils zwei zueinander parallele längere und kürzere Rahmenteile aufweisenden, in sich geschlossenen Rahmen (1), der über seinen gesamten Umfang als Winkelprofil ausgebildet ist, wobei der sich über den Umfang erstreckende Prägerand (7) des Kennzeichenschildes (8) seitlich durch den einen Schenkel und vorn durch den anderen Schenkel des Winkelprofils abgedeckt ist, und aus einem mit dem Rahmen verbundenen, an der Rückseite des Kennzeichenschildes in einer Ebene anliegenden Rückwandbereich, wobei das Kennzeichenschild zwischen dem Rahmen und dem Rückwandbereich des Verstärkungsbauteils eingeklemmt ist, dadurch gekennzeichnet, daß bei einer Ausbildung des Verstärkungsbauteils als einstückiges Formteil der Rückwandbereich des Verstärkungsbauteils lediglich durch voneinander getrennte Rückwandteilbereiche gebildet ist, die aus mehreren in einem gegenseitigen Abstand und in einem Abstand von den kürzeren Rahmenteilen (4) angeordneten, die längeren Rahmenteile (2 und 3) miteinander verbindenden Stegen (9) sowie aus zwei an den kürzeren Rahmenteilen (4) angeformten Zungen (10 und 11) bestehen, die sich jeweils nur über einen Teil der Länge der kürzeren Rahmenteile (4) erstrecken, wobei die eine Zunge (10), in Längsrichtung der längeren Rahmenteile (2 und 3) gesehen, eine kleinere Erstreckung aufweist als die gegenüberliegende Zunge (11).

2. Verstärkungsbauteil nach Anspruch 1, dadurch gekennzeichnet, daß der den Prägerand (7) des Kennzeichenschilds (8) vorn abdeckende Schenkel (5) des den Rahmen (1) bildenden Winkelprofils zum freien Rand dieses Schenkels (5) hin zurückspringend abgesetzt ist.

3. Verstärkungsbauteil nach Anspruch 1 oder 2, wobei der eine der beiden längeren Rahmenteile, von vorn gesehen, breiter ausgebildet ist als der andere, dadurch gekennzeichnet, daß der breiter ausgebildete längere Rahmenteil (3) im Bereich seiner Verbreiterung auf der Rückseite hohl ist und Verstärkungsrippen (12) aufweist.

## Claims

1. Reinforcing component of limitedly elastic plastics material for a number plate of a vehicle, consisting of a closed frame (1) corresponding to the periphery of the number plate, with two each mutually parallel longer and shorter frame parts, which frame is formed as an angle section over its whole periphery, the stamped margin (7) of the number plate (8) extending over the periphery being covered at the side by one leg and at the front by the other leg of the angle section, and with a rear wall region connected to the frame, lying in one plane on the rear side of the number plate, wherein the number plate is gripped between the frame and the rear wall region of the reinforcing component, characterized in that, in a formation of the reinforcing component as a unitary moulded part, the rear wall of the reinforcing component is formed merely by rear wall partial regions spaced from one another, which consist of webs (9) connecting together the longer frame parts (2 and 3) arranged mutually spaced and spaced from the shorter frame parts (4), and of two tongues (10 and 11) formed on the shorter frame parts (4), each extending over part only of the length of the shorter frame parts (4), the one tongue (10) having a smaller extent than the oppositely lying tongue (11), regarded in the longitudinal direction of the longer frame parts (2 and 3).

2. Reinforcing component according to claim 1, characterized in that the front leg (5) of the angle section forming the frame (1) covering the stamped margin (7) of the number plate (8) is set back recessed along the free edge of this leg.

3. Reinforcing component according to claim 1 or 2, wherein one of the two longer frame parts, seen from the front, is wider than the other, characterized in that the wider longer frame part (3) is hollow on the rear side in the region of its widening and has reinforcing ribs (12).

## Revendications

1. Elément, en matière plastique à élasticité limitée, de renforcement d'une plaque d'immatriculation pour véhicules automobiles, constitué d'un cadre (1) fermé sur lui-même, ayant, en correspondance avec le pourtour de la plaque d'immatriculation, deux parties de cadre longues et courtes respectivement parallèles et constitué sur tout son pourtour en cornière, le bord cambré (7) de la plaque d'immatriculation (8), qui s'étend sur le pourtour, étant recouvert latéralement par l'une des ailes et à l'avant par l'autre aile de la cornière, et d'une région formant la paroi arrière, reliée au cadre et s'appliquant suivant un plan à la face arrière de la plaque d'immatriculation, celle-ci étant serrée entre le cadre et la région de l'élément de renforcement formant la paroi arrière, caractérisé en ce que, l'élément de renforcement étant d'une pièce venue de moulage, la région de l'élément de renforcement formant la paroi arrière est formée simplement de deux régions partielles séparées l'une de l'autre et constituées de plusieurs barrettes (9) disposées à distance mutuellement les unes des autres et à distance des parties de cadre les plus courtes (4) et reliant entre elles les parties de cadre les plus longues (2 et 3), ainsi que de deux languettes (10 et 11) qui sont formées sur les parties de cadre les plus courtes (4) et qui ne s'étendent que sur une fraction de la longueur des parties de cadre les plus courtes (4), l'une des languettes (10) ayant, considéré dans la direction longitudinale des parties de cadre les plus longues (2 et 3), une étendue moindre que la languette (11) opposée.

2. Elément de renforcement suivant la revendication 1, caractérisé en ce que l'aile (5) de la cornière formant le cadre (1), qui recouvre le bord cambré (7) de la plaque d'immatriculation (8) vers l'avant, est décalée en retrait par rapport à l'extrémité libre de cette aile (5).

3. Elément de renforcement suivant la revendication 1 ou 2, l'une des deux parties de cadre les plus longues étant, vue par l'avant, plus large que l'autre, caractérisé en ce que la partie de cadre plus longue (3) qui est la plus large est creuse dans la région de son élargissement du côté arrière et comporte des nervures de renforcement (12).

# Fig. 1

# Fig. 2

0 197 472

Fig. 3